# EUROPEAN PATENT SPECIFICATION

(11) **EP 3 837 954 B1**
(45) Date of publication and mention of the grant of the patent: **23.08.2023**
(21) Application number: 20214897.9
(22) Date of filing: 17.12.2020
(51) Int. Cl.: A01D 34/66, A01D 57/20, A01D 75/30

(54) **MOWER COMBINATION**
MÄHVORRICHTUNG
COMBINAISON DE MÉCANISME DE TONTE

(30) Priority: 19.12.2019 GB 201918845
(43) Date of publication of application: 23.06.2021
(73) Proprietor: AGCO International GmbH, 8212 Neuhausen am Rheinfall (CH)
(72) Inventor: Fillep, Johannes, 90537 Feucht (DE); Kinast, Ronnie, 90537 Feucht (DE)
(74) Representative: AGCO Intellectual Property Department

(56) References cited:
- EP-A1- 2 529 614
- WO-A1-03/079761

## Description

### FIELD OF THE INVENTION

The present invention relates to a mower combination comprising an agricultural vehicle and a number of mowing units suitable for generating swathes of cut crop, and in particular to a mowing apparatus for cutting a standing crop such as hay.

### BACKGROUND

It is known to provide a mower combination in which a first mower unit is located ahead of an agricultural vehicle such as a tractor with two further lateral mower units trailing the agricultural vehicle. The rear mower units can be provided with conveyor units for depositing cut crop into a swath or swathes behind the agricultural vehicle.

It is known for an operator to cause the conveyors units to be displaced from a normal working position such that a taper is provided at the start or end of a swath. This is because it is desirable that a swath should be as compact as possible at the ends.

However, the need to constantly monitor and adjust the settings of the conveyor units throughout the working of multiple swaths over a number of fields of varying shapes and sizes is stressful and tiring for the operator of the mower combination.

Document EP 2 529 614 A1 discloses a mower combination comprising an agricultural vehicle and a number of mowing units suitable for cutting a standing crop connected to the agricultural vehicle. The mower combination includes a front mowing unit and two lateral mowing units located behind and to the sides of the front mowing unit. Each of the lateral mowing units is provided with conveyor units to deposit the cut crop as a swath. Each of the conveyor units is mounted to be displaceable with respect to the associated lateral mowing unit in a direction lateral to a direction of travel of the mower combination.

### SUMMARY OF THE INVENTION

According to a first aspect of the present invention, a mower combination comprises an agricultural vehicle and a number of mowing units suitable for cutting a standing crop connected to the agricultural vehicle, including a front mowing unit and two lateral mowing units located behind and to the sides of the front mowing unit, each of the lateral mowing units being provided with conveyor units to deposit the cut crop as a swath, each of the conveyor units being mounted to be displaceable with respect to the associated lateral mowing unit in a direction lateral to a direction of travel of the mower combination, the mower combination further comprising a control unit receiving a plurality of signals, the signals representing unprocessed crop boundary data, field boundary data, and data relating to the lateral displacement of each of the lateral mowing units, the control unit being configured to receive the plurality of signals and compare the signals for the unprocessed crop boundary data, the field boundary data and the data relating to the lateral displacement of each of the conveyor units against a predetermined target set of values and to adjust the lateral displacement of at least one conveyor unit based on this comparison to taper the swath in a predetermined manner when commencing or concluding depositing the cut crop as the swath.

This has as an advantage that the lateral displacement of the conveyor units can be altered to allow for production of repeatedly uniform tapers of a desired configuration.

Further, this also has as an advantage that the operator no longer needs constantly to monitor the operation of the conveyor units thereby reducing the stress and tiredness of the operator.

Preferably, the signals representing unprocessed crop boundary data are provided by one or more sensors located on the front mowing unit or the agricultural vehicle. Alternatively or additionally, the signals representing unprocessed crop boundary data are provided by one or more sensors located on the lateral mowing units.

Preferably, the sensors include optical sensors, or gps apparatus.

Preferably the control unit receives signals representing aspects of the agricultural vehicle. More preferably the control unit receives signals corresponding to an orientation of a longitudinal axis of the agricultural vehicle and/or a speed of the agricultural vehicle.

According to a second aspect of the invention, a method of operation of a mower combination in accordance with the first aspect of the invention comprises the steps of receiving a plurality of signals, the signals representing unprocessed crop boundary data, field boundary data, and data relating to a lateral displacement of each of two conveyor units, comparing the plurality of signals for the unprocessed crop boundary data, the field boundary data and a lateral displacement of one or more of the conveyor units against a predetermined set of target values and adjusting the lateral displacement of at least one conveyor unit based on this comparison.

According to a third aspect of the present invention, a computer readable program comprises instructions which when executed by a computer, causes the mower combination of the first aspect of the invention to implement the method of the second aspect of the invention.

### BRIEF DESCRIPTION OF THE DRAWINGS

The invention will now be described, by way of example only, with reference to the accompanying drawings, in which:
Figure 1 shows a plan view of a mower combination for use in the present invention;

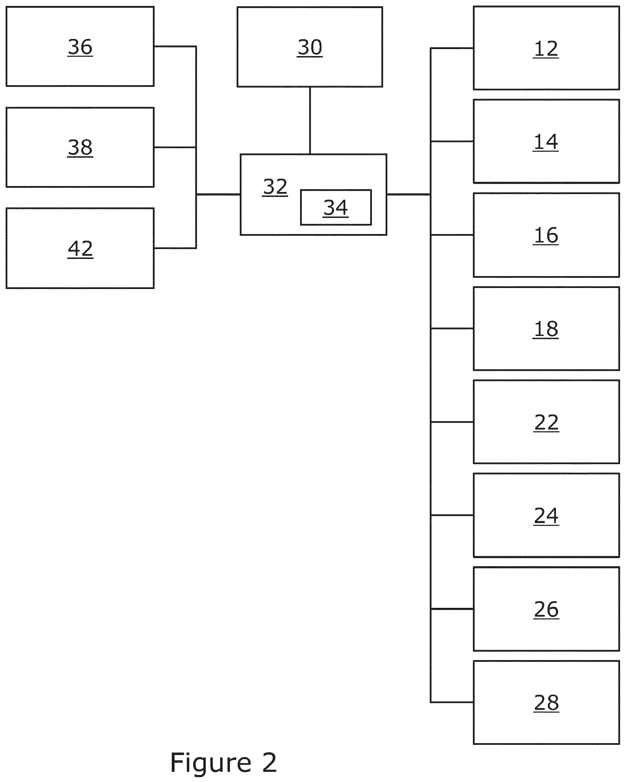

Figure 2 shows a schematic view of elements of a mower combination for use in the present invention;
Figure 3a shows a view similar to Figure 1 showing formation of a swath as the mower combination approaches the end of a blunt headland or field boundary;
Figure 3b shows a view similar to Figure 3a showing formation of the swath following lateral displacement of the conveyor units;
Figure 4 shows a flow diagram illustrating an example control method for the swath formation of Figures 3a and 3b;
Figure 5a shows a view similar to Figure 1 showing formation of a swath as the mower combination approaches the end of an angled headland or field boundary;
Figure 5b shows a view similar to Figure 5a showing formation of the swath following lateral displacement of one of the conveyor units and prior to the displacement of the other of the conveyor units; and
Figure 6 shows a flow diagram illustrating an example control method for the swath formation of Figures 5a and 5b.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description. The scope of the invention is defined by the appended claims.

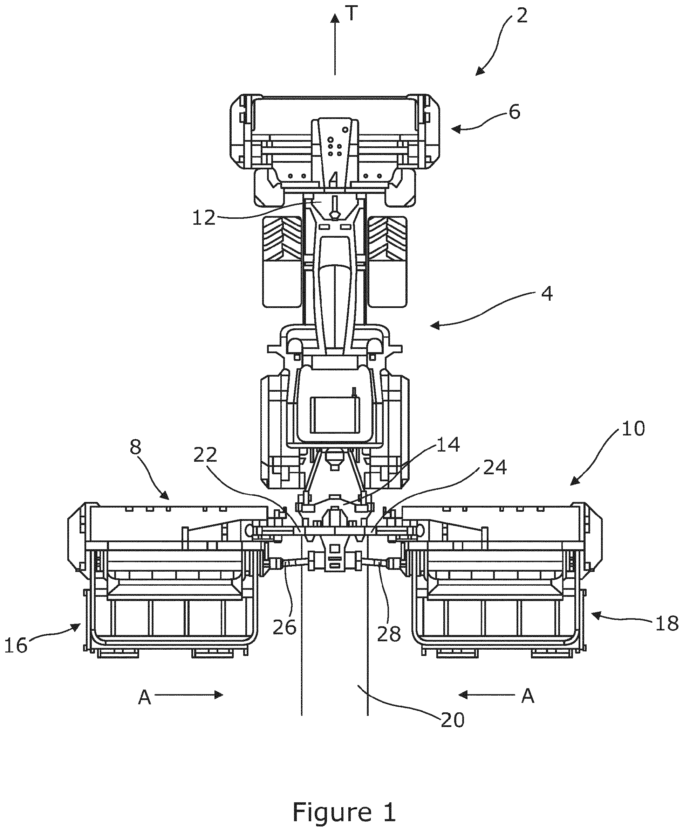

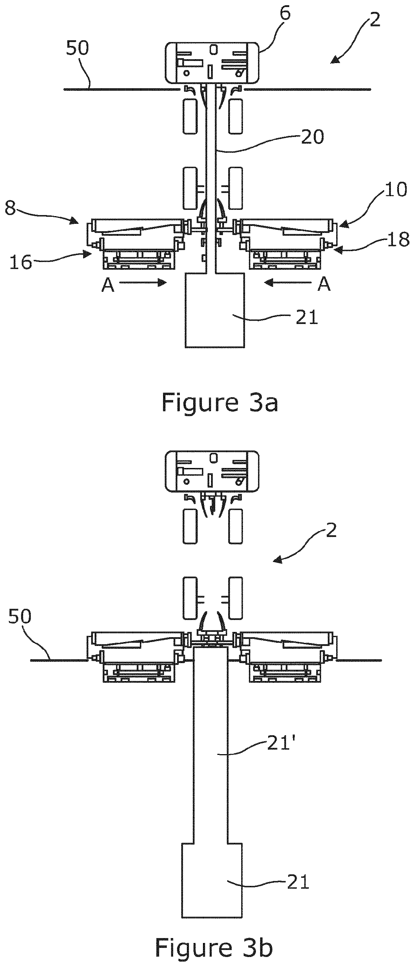

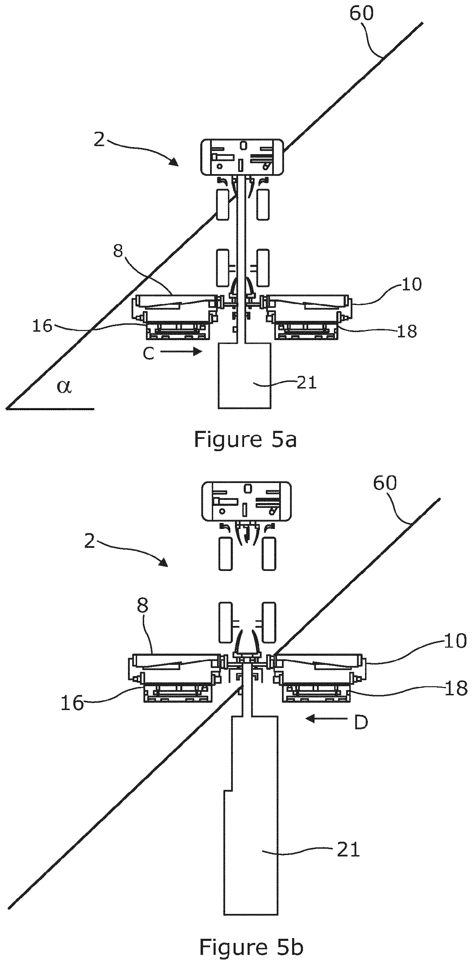

Reference to terms such as longitudinal, transverse and vertical are made with respect to a longitudinal vehicle axis which is parallel to a normal forward direction of travel. With reference first to Figures 1 and 3a, a plan view of a mower combination 2 for use in the present invention is shown. (For reasons of clarity, substantially only the wheels of the agricultural vehicle are shown in Figures 3a,3b and 5a,5b).

A mower combination 2 comprises an agricultural vehicle 4 such as a tractor and a number of mowing units 6,8,10 suitable for cutting standing crop, the mowing units 6,8,10 being connected to the agricultural vehicle. The mowing units include a front mowing unit 6 located to the front of the agricultural vehicle 4 and two lateral mowing units 8,10 located behind and to the sides of the agricultural vehicle 4, each of the mowing units 6,8,10 being adapted to cut crop. The front mowing unit 6 is conveniently mounted on a front hitch 12 of the agricultural vehicle 4. The two lateral mowing units 8,10 are conveniently mounted on a central chassis supported from a rear hitch 14 of the agricultural vehicle 4.

The lateral mowing units 8,10 are supported from a central chassis by hydraulic apparatus 22,24. Each hydraulic unit 22,24 may be used to move a respective lateral mowing unit 8,10 from a working position to a transport position. A headland position may be defined between the working position and the transport position. In the working position the height of each of the lateral mowing units 8,10 above the ground surface may be further controlled by operation of the hydraulic apparatus 22,24.

In the illustrated embodiment of Figure 1 a swath 20 produced by the front mowing unit 6 is shown. In practice conveyor units 16,18 mounted to the rear of the lateral mowing units 8,10 are adapted to direct the deposit of cut crop material to one side or the other of the respective lateral mowing units 8,10 to produce a broader central swath 21 or one or more additional swathes as desired (cf Figures 3a,5a). For clarity, these swathes are omitted from Figure 1.

The conveyor units 16,18 are mounted to be displaceable with respect to the lateral mowing units 8,10. The conveyor units may be displaced by hydraulic apparatus 26,28 or other suitable apparatus. The conveyor units 16,18 are mounted to be displaced (arrows A in Figures 1 and 3a) in a direction lateral to a direction of travel (arrow T in Figure 1) of the mower combination 2.

The conveyor units 8,10 can comprise conveyor belts or conveyor screws.

An operator can control operation of the front and rear mowing units 6,8,10 from within the agricultural vehicle 4 by use of a suitable user terminal 30. For example the operator can control the lateral displacement of the conveyor units, can cause each of the mowing units 6,8,10 to move from a working position to a headland position, can cause the rear mowing units 8,10 to move from the working position to a transport position, or can cause the conveyor units 16,18 to move from an active position to an inactive position.

The user terminal 30 communicates with an electronic control unit 32. The control unit 32 may provide signals to control operation of the front and rear hitches 12,14 of the agricultural vehicle 4 and provides signals to control operation of the mowing units 6,8,10 and the conveyor units 16,18 eg to control the lateral displacement of the conveyor units 16,18. Conveniently the signals are provided by way of a suitable data communication network such as one compliant with the ISOBUS standard (a network in conformance to ISO 11783).

The control unit 32 may conveniently comprise a single processor located on the agricultural vehicle or its functions may be split between a processor located on the agricultural vehicle and one or more additional processors located on the mowing units 6,8,10, the additional processor(s) being in electronic communication with the first processor.

The control unit 32 is also able to access a suitable memory 34. The memory 34 may take any suitable form and is in electronic communication with the control unit 32. The memory 34 is adapted to store, in any suitable manner such as a database or look up table, reference values for a desired lateral displacement of the conveyor units 16,18 in the presence or absence of unprocessed crop ahead of the mower combination.

The mower combination 2 further comprises a plurality of sensors adapted to provide input signals to be received by the control unit 32. An input signal representing the presence of an unprocessed crop boundary is provided. The presence or absence of unprocessed crop can be provided by a suitable sensor or sensors 36. In a preferred embodiment, the sensor is provided on the front mower unit 6 or the agricultural vehicle 4. Any suitable sensor may be utilised, including for example a camera.

Alternatively the input signal could be provided as a result of information provided by a GPS sensor, for example the location of the mower combination 2 may be known or calculated from existing mapped data allowing the control unit 32 to determine whether the location to be traversed has previously been processed and accordingly whether crop in front of the mower combination has been or is yet to be processed and accordingly, the relative location of both the unprocessed crop boundary and the field boundary.

In the case of a GPS sensor, it will be understood that a network interface 42 connected to the control unit 32 is provided. The network interface 42 can comprise hardware and/or software that enables wireless connection to one or more remotely located computing devices over a network (e.g., a wireless or mixed wireless and wired network). For instance, the network interface 42 may cooperate with browser software or other software of the control unit 30 to communicate with a server device, enabling remote monitoring or control of the mower combination 2.

The GPS sensor may also be sued to provide an input signal representative of the location of the field boundary (including the location of the headland). Alternatively the data relating to the field boundary may be downloaded by way of the network interface 42 or otherwise signalled to the control unit 32 before commencing operation of the mower combination.

Suitable sensors 38 mounted on the mower combination 2, for example on the conveyor units 16,18 can provide input signals representative of the lateral displacement of the conveyor units 16,18. The lateral displacement may be measured from any suitable reference point.

The control unit 32 is configured to receive the input signals representing the presence or absence of unprocessed crop and the lateral displacement of the conveyor units 16,18 and to compare the input signals with the reference values for a reference lateral displacement of the conveyor units 16,18 and, as required, adjust the lateral displacement of at least one conveyor unit 16,18 based on this comparison.

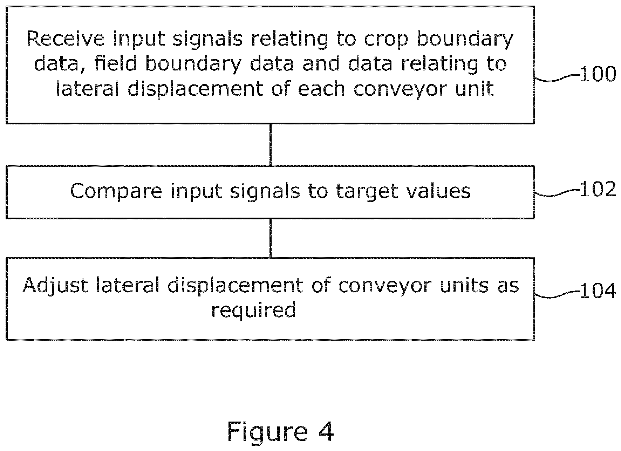

For example as the mower combination 2 traverses a field having a blunt headland 50 (Figure 3a), for example at the end of a rectangular field, the control unit 32 receives signals indicating that the unprocessed crop boundary is approaching the field boundary and a current lateral displacement of the conveyor units 16,18 (step 100, Figure 4). Based on a comparison of the input signals with the reference target values stored in the memory 34 (step 102), the control unit 32 causes the lateral displacement of each of the conveyor units 16,18 to be adjusted (step 102). The mower combination will then create a swath of narrower width 21' as it traverses the final section of unprocessed crop ahead of the headland region (Figure 3b) and the unprocessed crop boundary meets the field boundary. The control unit 32 can then cause the rear mowing units 8,10 (and the associated conveyors 16,18) to adopt a headland position.

On the return run, the control unit 32 receives signals indicating the field boundary. The control unit 32 lowers the rear mowing units 8,10 from the headland position to a working position to meet the field boundary. The control unit 32 then receives signals indicating that the unprocessed crop boundary is moving away from the field boundary. Based on a comparison of the input signals with the reference values stored in the memory 34, after depositing the cut crop as a swath of relatively narrow width on the initial cutting of the unprocessed crop away from the field boundary, the control unit 32 then causes the lateral displacement of each conveyor unit 16,18 to be adjusted outward such a that the cut crop is deposited as a swath of regular width.

The control unit 32 may also receive signals indicative of the speed of the agricultural vehicle allowing the control unit 32 a further means of determining the relative position of the mower combination from the field boundary and to adjust the lateral displacement of at least one conveyor unit.

Figures 5a and 5b illustrate a common situation, namely that of an angled headland or field boundary 60. In such a situation the control unit 30 based upon the input signals will determine that the unprocessed crop interface varies to the left and to the right of the mower combination.

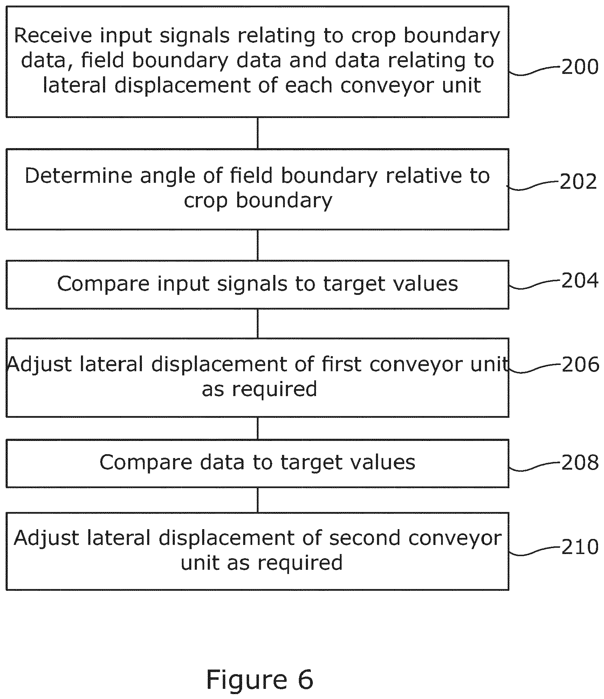

As in the example of Figures 3a and 3b, the control unit 32 receives signals indicating that the unprocessed crop boundary is approaching the field boundary and a current lateral displacement of the conveyor units 16,18 (step 200, Figure 6). The control unit 32 is able to determine an angle α (in Figures 5a and 5b running from left to right) between the field boundary 60 and the crop boundary (step 202, Figure 6). Based on a continuous comparison of the input signals (and so the angle α) with the reference values stored in the memory 34 (steps 204,208), the control unit 32 causes the lateral displacement of a first conveyor unit 16 to be adjusted (step 206, Figure 6) - in Figure 5a the left hand conveyor unit (arrow C) - and then subsequently the lateral displacement of a second conveyor unit 18 (step 220 Figure 6) in Figure 5b the right hand conveyor unit (arrow D).

Alternatively, the control unit 30 determines on the basis of signals from the sensors 36 a first crop boundary location ahead of a first lateral mower unit and its associated conveyor unit and a second crop boundary location ahead of the second lateral mower unit and its associated conveyor unit. Based upon the comparison of the input signals with the reference values stored in the memory 34, the control unit 32 causes the lateral displacement of each of the conveyor units in turn.

In other embodiments, the control unit 32 may receive input from the user terminal 30, as entered by the operator. For instance, the operator may prompt a display of the parameters (the distance to or from an unprocessed crop interface to a field boundary, the lateral displacement of the conveyor units 16,18). The control unit 32 provides the corresponding information for rendering on a display screen in the agricultural vehicle 4. Additionally or alternatively the control unit 32 may provides the corresponding information for rendering on a display screen remote from the agricultural vehicle 4.

Additionally, the operator may use the user terminal 32 to configure the width of a tapered swath and or the length of the swath of reduced width as desired.

In some embodiments, the control unit 32 may provide feedback of the automatic adjustment in the lateral position of the conveyor units 16,18 to the operator via the user terminal 30, for example visually or audibly.

From reading the present disclosure, other modifications will be apparent to persons skilled in the art. Such modifications may involve other features which are already known in the field of mowers and component parts therefore and which may be used instead of or in addition to features already described herein.

## Claims

1. A mower combination (2) comprising an agricultural vehicle (4) and a number of mowing units (6,8,10) suitable for cutting a standing crop connected to the agricultural vehicle (4), including a front mowing unit (6) and two lateral mowing units (8,10) located behind and to the sides of the front mowing unit (6), each of the lateral mowing units (8,10) being provided with conveyor units (16,18) to deposit the cut crop as a swath, each of the conveyor units (16,18) being mounted to be displaceable with respect to the associated lateral mowing unit (8,10) in a direction lateral to a direction of travel of the mower combination (2), the mower combination (2) further comprising a control unit (32) configured to receive a plurality of signals, the signals representing unprocessed crop boundary data, field boundary data, and data relating to the lateral displacement of each of the lateral mowing units (8,10), the control unit (32) being further configured to receive the plurality of signals and compare the signals for the unprocessed crop boundary data, the field boundary data and the data relating to the lateral displacement of each of the conveyor units against a predetermined target set of values and to adjust the lateral displacement of at least one conveyor unit (16,18) based on this comparison to taper the swath in a predetermined manner when commencing or concluding depositing the cut crop as the swath.

2. A mower combination (2) according to claim 1, **characterised in that** the signals representing unprocessed crop boundary data are provided by one or more sensors (36) located on the front mowing unit (6) or the agricultural vehicle (4).

3. A mower combination according to claim 1 or claim 2, **characterised in that** the signals representing unprocessed crop boundary data are provided by one or more sensors located on the lateral mowing units (8,10).

4. A mower combination according to any of claims 1 to 3, **characterised in that** the sensors include optical sensors, or gps apparatus.

5. A mower combination according to any of claims 1 to 4, **characterised in that** the control unit (32) receives signals representing aspects of the agricultural vehicle.

6. A mower combination according to claim 5, **characterised in that** the control unit (32) receives signals corresponding to an orientation of a longitudinal axis of the agricultural vehicle (4) and/or a speed of the agricultural vehicle (4).

7. A method of operation of a mower combination (2) according to any of claims 1 to 5 comprising the steps of receiving a plurality of signals, the signals representing unprocessed crop boundary data, field boundary data, and data relating to a lateral displacement of each of two conveyor units (16,18), comparing the plurality of signals for the unprocessed crop boundary data, the field boundary data and a lateral displacement of one or more of the conveyor units (16,18) against a predetermined set of target values and adjusting the lateral displacement of at least one conveyor unit (16,18) based on this comparison.

8. A computer readable program comprising instructions which, when the program is executed by a computer, causes the mower combination (2) of any of claims 1 to 5 to implement the method of claim 7.

## Patentansprüche

1. Mäh-Kombination (2) mit einem landwirtschaftlichen Fahrzeug (4) und mehreren Mäheinheit (6, 8, 10), die für ein Schneiden eines stehenden Ernteguts geeignet sind und mit dem landwirtschaftlichen Fahrzeug (4) verbunden sind, mit einer vorderen Mäheinheit (6) und zwei lateralen Mäheinheiten (8, 10), die hinter und seitlich von der vorderen Mäheinheit (6) angeordnet sind, wobei jede der lateralen Mäheinheiten (8, 10) mit mindestens einer Fördereinheit (16, 18) ausgestattet ist zur Ablage des geschnittenen Ernteguts als Schwade und jede der Fördereinheiten (16,18) geeignet montiert ist für eine Ermöglichung einer Verlagerung hinsichtlich der zugeordneten lateralen Mäheinheit (8, 10) in eine Richtung lateral zu einer Fahrrichtung der Mäh-Kombination (2), wobei die Mäh-Kombination (2) des Weiteren eine Steuereinheit (32) aufweist, die konfiguriert ist zum Empfangen mehrerer Signale, wobei die Signale nicht bearbeitete Erntegut-Grenz-Daten, Feld-Grenz-Daten und Daten, die die laterale Verlagerung jeder der lateralen Mäheinheiten (8, 10) betreffen, repräsentieren, wobei die Steuereinheit (32) des Weiteren konfiguriert ist zum Empfangen der mehreren Signale und zum Vergleichen der Signale für die nicht bearbeiteten Erntegut-Grenz-Daten, die Feld-Grenz-Daten und die Daten, die die laterale Verlagerung von jeder der Fördereinheiten betreffen, mit einem vorgegebenen Zielsatz von Werten und zum Anpassen der lateralen Verlagerung von jeder der Fördereinheiten (16, 18) auf Basis des Vergleiches, um die Schwade in eine vorgegebene Weise zu verjüngen, wenn die Ablage des geschnittenen Ernteguts als Schwade beginnt oder endet.

2. Mäh-Kombination (2) nach Anspruch 1, **dadurch gekennzeichnet, dass** die Signale, die nicht bearbeitete Erntegut-Grenz-Daten repräsentieren, von mindestens einem Sensor (36) bereitgestellt werden, der auf oder an der vorderen Mäheinheit (6) oder dem landwirtschaftlichen Fahrzeug (4) angeordnet ist.

3. Mäh-Kombination (2) nach Anspruch 1 oder 2, **dadurch gekennzeichnet, dass** die Signale, die nicht bearbeitete Erntegut-Grenz-Daten repräsentieren, von mindestens einem Sensor bereitgestellt werden, der auf oder an den lateralen Mäheinheiten (8, 10) angeordnet ist.

4. Mäh-Kombination (2) nach einem der Ansprüche 1 bis 3, **dadurch gekennzeichnet, dass** die Sensoren optische Sensoren oder eine GPS-Einrichtung aufweisen.

5. Mäh-Kombination (2) nach einem der Ansprüche 1 bis 4, **dadurch gekennzeichnet, dass** die Steuereinheit (32) Signale empfängt, die Aspekte oder Größenverhältnisse des landwirtschaftlichen Fahrzeugs repräsentieren.

6. Mäh-Kombination (2) nach Anspruch 5, **dadurch gekennzeichnet, dass** die Steuereinheit (32) Signale empfängt, die mit einer Orientierung einer Längsachse des landwirtschaftlichen Fahrzeugs (4) und/oder einer Geschwindigkeit des landwirtschaftlichen Fahrzeugs (4) korrespondieren.

7. Verfahren zum Betrieb einer Mäh-Kombination (2) nach einem der Ansprüche 1 bis 5, mit den Verfahrensschritten eines Empfangens mehrerer Signale, wobei die Signale nicht bearbeitete Erntegut-Grenz-Daten, Feld-Grenz-Daten und Daten, die eine laterale Verlagerung jeder der beiden Fördereinheiten (16, 18) betreffen, repräsentieren, eines Vergleichens der mehreren Signale für die nicht bearbeiteten Erntegut-Grenz-Daten, die Feld-Grenz-Daten und eine laterale Verlagerung mindestens einer Fördereinheit (16, 18) mit einem vorgegebenen Satz von Zielwerten und eines Anpassens der lateralen Verlagerung mindestens einer Fördereinheit (16, 18) auf Basis dieses Vergleichs.

8. Computerlesbares Programm mit Instruktionen, die, bei Ausführung des Programms mittels eines Computers, bewirken, dass die Mäh-Kombination (2) nach einem der Ansprüche 1 bis 5 das Verfahren nach Anspruch 7 implementiert.

## Revendications

1. Combinaison de faucheuse (2) comprenant un véhicule agricole (4) et un certain nombre d'unités de fauchage (6, 8, 10), appropriées de manière à couper une culture sur pied, couplées au véhicule agricole (4), comportant une unité de fauchage avant (6) et deux unités de fauchage latérales (8, 10) situées derrière et sur les côtés de l'unité de fauchage avant (6), chacune des unités de fauchage latérales (8, 10) comportant des unités de convoyage (16, 18) afin de déposer la culture coupée en andain, chacune des unités de convoyage (16, 18) étant montée de manière à pouvoir être déplacée par rapport à l'unité de fauchage latérale associée (8, 10) dans une direction latérale par rapport à une direction de déplacement de la combinaison de faucheuse (2), la combinaison de faucheuse (2) comprenant, en outre, une unité de commande (32) configurée de manière à recevoir une pluralité de signaux, les signaux représentant des données de limite de culture non traitée, des données de limite de champ et des données se rapportant au déplacement latéral de chacune des unités de fauchage latérales (8, 10), l'unité de commande (32) étant, en outre, configurée de manière à recevoir la pluralité de signaux et à comparer les signaux des données de limite de culture non traitée, les données de limite de champ et les données se rapportant au déplacement latéral de chacune des unités de convoyage par rapport à un jeu de valeurs de consigne prédéterminé et à régler le déplacement latéral d'au moins une unité de convoyage (16, 18) sur la base de cette comparaison afin d'incliner l'andin d'une manière prédéterminée lors du début ou de la fin du dépôt de la culture coupée sous forme d'andin.

2. Combinaison de faucheuse (2) selon la revendication 1, **caractérisée en ce que** les signaux représentant des données de limite de culture non traitée sont fournis par un ou plusieurs capteur (36) situés sur l'unité de fauchage avant (6) ou le véhicule agricole (4).

3. Combinaison de faucheuse selon la revendication 1 ou 2, **caractérisée en ce que** les signaux représentant les données de limite de culture non traitée sont délivrés par un ou plusieurs capteurs situés sur les unités de fauchage latérales (8, 10).

4. Combinaison de faucheuse selon l'une quelconque des revendications 1 à 3, **caractérisée en ce que** les capteurs comportent des capteurs optiques ou des dispositifs GPS.

5. Combinaison de faucheuse selon l'une quelconque des revendications 1 à 4, **caractérisée en ce que** l'unité de commande (32) reçoit des signaux représentant certains aspects du véhicule agricole.

6. Combinaison de faucheuse selon la revendication 5, **caractérisée en ce que** l'unité de commande (32) reçoit des signaux correspondant à une orientation d'un axe longitudinal du véhicule agricole (4) et/ou à une vitesse du véhicule agricole (4).

7. Procédé de mise en oeuvre d'une combinaison de faucheuse (2) selon l'une quelconque des revendications 1 à 5, comprenant les étapes de réception d'une pluralité de signaux, les signaux représentant des données de limite de culture non traitée, des données de limite de champ et des données se rapportant à un déplacement latéral de chacune des deux unités de convoyage (16, 18), de comparaison de la pluralité de signaux des données de limite de culture non traitée, des données de limite de champ et d'un déplacement latéral d'une ou plusieurs des unités de convoyage (16, 18) par rapport à un jeu de valeurs de consigne prédéterminé et de réglage du déplacement latéral d'au moins une unité de convoyage (16, 18) sur la base de cette comparaison.

8. Programme pouvant être lu par ordinateur comprenant des instructions qui, lorsque le programme est exécuté par un ordinateur, assurent la mise en oeuvre du procédé selon la revendication 7 par la combinaison de faucheuse (2) selon l'une quelconque des revendications 1 à 5.
